Europäisches Patentamt

(19) European Patent Office

Office européen des brevets

(11) Numéro de publication: **0 262 031 B1**

(12) # FASCICULE DE BREVET EUROPEEN

(45) Date de publication du fascicule du brevet:
20.02.91 Bulletin 91/08

(51) Int. Cl.⁵: **C10L 3/04**, C04B 28/28, F17C 11/00

(21) Numéro de dépôt: 87402066.2

(22) Date de dépôt: 16.09.87

(54) **Masse silicocalcaire à haute porosité pour stockage de gaz, et procédé de fabrication.**

Le dossier contient des informations techniques présentées postérieurement au dépôt de la demande et ne figurant pas dans le présent fascicule.

(30) Priorité: 18.09.86 FR 8613060

(43) Date de publication de la demande:
30.03.88 Bulletin 88/13

(45) Mention de la délivrance du brevet:
20.02.91 Bulletin 91/08

(84) Etats contractants désignés:
AT BE CH DE ES FR GB GR IT LI LU NL SE

(56) Documents cités:
EP-A- 0 056 645
EP-A- 0 127 960
DE-C- 726 925
FR-A- 546 406
FR-A- 903 445
FR-A- 1 046 078
US-A- 1 841 922
US-A- 4 402 892

(73) Titulaire: L'AIR LIQUIDE, SOCIETE ANONYME POUR L'ETUDE ET L'EXPLOITATION DES PROCEDES GEORGES CLAUDE
75, Quai d'Orsay
F-75321 Paris Cédex 07 (FR)

(72) Inventeur: Deck, Philippe
24, allée Chevallier
F-93100 Montreuil (FR)
Inventeur: Delode, Georges
8, avenue Boileau Bois l'Abbé
F-94500 Champigny Sur Marne (FR)
Inventeur: Vagnard, Gérard
82, rue de l'Egalité
F-93260 Les Lilas (FR)
Inventeur: Colturri, Bartoloméo
50, rue Mac-Mahon
F-20155 Milan (IT)

(74) Mandataire: Sadones Laurent, Renée et al
L'AIR LIQUIDE 75, quai d'Orsay
F-75321 Paris Cédex 07 (FR)

## Description

La présente invention concerne une masse silico-calcaire à haute porosité, utilisable dans le domaine des matières de garnissage pour des récipients destinés à emmagasiner des gaz, en particulier de l'acétylène dissous.

Dans la pratique industrielle courante, les masses connues de ce type sont fabriquées à partir d'un mélange intime de chaux, silice broyée ou fossile et d'amiante en suspension dans l'eau. La pâte ainsi obtenue, introduite dans des récipients, du type bouteilles, est ensuite soumise à l'action de la vapeur en autoclave pour initier et réaliser complètement la réaction chaux-silice qui donne naissance au silico-calcaire ; puis on transfère dans un four de séchage pour éliminer l'eau et créer la porosité recherchée.

L'amiante est ajouté à la composition aqueuse de silice et de chaux pour son action de fibre renforçatrice et d'agent de suspension. Or, les récentes contraintes relatives aux conditions d'hygiène et de sécurité liées à la manipulation de l'amiante ont amené à reconsidérer l'emploi de cette fibre naturelle dont les propriétés caractéristiques, dans la fabrication des masses silico-calcaires poreuses, sont d'armer la structure cristalline et de concourir au maintien de la suspension des produits solides : silice et chaux dans une grande quantité d'eau.

On sait que la stabilisation de la pâte avant cuisson peut être nettement améliorée par l'emploi d'agents de suspension. Par FR-A- 1 358 446, on connaît l'effet de l'addition de quantités substantielles jusqu'à 10 % d'agents organiques de mise en suspension. Certains dérivés de la cellulose, tels que les alkyl-hydroxyalkyl-cellulose, en particulier les méthyl et éthylhydroxyéthylcelluloses permettent d'obtenir une excellente stabilisation de la suspension contenant de l'amiante.

On a envisagé de compenser la suppresion de l'amiante par l'adjonction d'agents de suspension organiques en fortes quantités. Or, il s'est avéré que si l'addition d'un agent de suspension organique en quantité importante peut notablement corriger le défaut de décantation des produits solides lors de la fabrication de la pâte silice/chaux et eau, du fait de la destruction de ce type de composé organique pendant la cuisson de la pâte, on a constaté une baisse des propriétés mécaniques des masses silico-calcaires à haute porosité. La fragilité et friabilité des matières poreuses ainsi obtenues sont telles qu'elles les rendent inaptes pour l'application concernée.

En outre, le EP-A-0064 916 enseigne que l'adjonction de silice synthétique ultra-fine amorphe à forte surface spécifique de 150 à 300 m2 par gramme de capacité d'absorption élevée, en remplacement total ou partiel de la silice broyée, permet d'obtenir des masses silico calcaires homogènes à porosité de l'ordre de 90 % et présentant une résistance à l'écrasement de 1,5 à 2 MPa. Cependant, la quantité importante de silice de synthèse ultra-fine amorphe, représentant 70 à 100 % en poids de la silice totale, entraîne une certaine difficulté d'élaboration de la pâte et conduit à un coût élevé d'obtention des masses silico-calcaires à l'échelle industrielle.

Dans le domaine de l'isolation thermique avec des matériaux du type ciment on a envisagé l'emploi de diverses fibres d'armature, d'origine organique ou minérale.

Ainsi, le brevet US-A-4 128 434, préconise l'emploi de fibres de bois, polyester, coton ou semblables, en remplacement de l'amiante, dans l'élaboration de matériau d'isolation thermique, à haute densité, sous forme de plaques ou de panneaux moulés.

L'emploi de fibres de cellulose a été envisagé dans le brevet US-A4 238 240, également dans le secteur des isolants thermiques, obtenus par compactage d'une pâte précédemment soumise à une cuisson vers 800 °C.

Le brevet US-A-3 895 096 propose la mise en oeuvre de fibres cellulosiques et de fibres de verre alcalino-résistantes dans la fabrication d'un matériau très poreux, très léger, peu résistant.

Les qualités exigées pour un bon isolant thermique sont différentes de celles requises pour une masse destinée au stockage de gaz dissous. La masse silico-calcaire doit se former directement à l'intérieur de la bouteille, dans des conditions telles qu'elle soit monolithique homogène et remplissant sans lacune le cylindre et l'ogive de la bouteille. Après cuisson en autoclave, puis séchage, la bouteille d'acétylène remplie de masse silico-calcaire est prête à l'emploi.

De plus, les masses poreuses utilisées dans le remplissage des bouteilles doivent répondre à l'exigence de solidité. Car, la masse poreuse contenue dans les bouteilles de gaz est soumise à des chocs et vibrations, lors du transport et de la manipulation des bouteilles. De plus, la masse doit résister aux contraintes des vidanges et remplissages successifs de gaz et du solvant éventuel de ce gaz.

Au contraire, un excellent isolant thermique doit avoir la plus faible masse volumique possible tout en ayant une résistance mécanique relativement peu élevée.

Toutes les techniques proposées pour l'obtention de matériaux d'isolation thermique, qui ne tiennent pas compte de la décantation de la pâte, donc de l'homogénéité du matériau final et de l'obtention directe dans le récipient du matériau fini prêt à l'emploi, ne sont pas adaptées à la fabrication de masse silico-calcaire poreuse homogène pour le stockage de gaz et en particulier de l'acétylène et de son solvant.

D'autre part, le brevet US-A-4 349 463 fait référence à l'emploi de fibres de verre alcalino-résistantes dans la fabrication de masses de stockage d'acétylène. Ces fibres très spéciales, de coût élevé, conduisent à la fabrication d'un produit industriel onéreux pour le stockage d'acétylène.

Il a été trouvé un matériau de renforcement bon marché, de structure fibreuse, choisi parmi les fibres de cellulose très partiellement mécaniquement délignifiées, partiellement chimiquement délignifiées, partiellement chimiquement délignifiées puis raffinées par traitement mécanique. Il est avantageux d'employer de 3 à 30 % par rapport aux solides de fibres de cellulose d'un des types précédemment mentionnés, ou d'un mélange de ceux-ci, partiellement de 5 à 20 %.

Ce type particulier de fibres de cellulose représente un bon agent d'armature pour les masses silico-calcaires poreuses. La présence de ces fibres améliore la résistance de la matière poreuse, rendant le produit moins fragile aux chocs. Cependant, ce matériau n'empêche pas totalement la décantation de la silice et de la chaux lors de l'élaboration de la pâte liquide. Or, si cette décantation se produisait, elle conduirait à de mauvais remplissages de bouteilles, avec des lacunes et des retraits importants, ce qui est absolument inacceptable dans la fabrication de masse de stockage de gaz dissous. La masse poreuse obtenue après cuisson doit être monolithique, homogène et remplir parfaitement les bouteilles pour résister à une décomposition du gaz stocké.

Pour pallier cet inconvénient, on a découvert qu'il est avantageux de mettre en oeuvre de la chaux éteinte avec de l'eau chaude, entre 40 et 85°C ; dans ces conditions on a constaté que la chaux éteinte décante faiblement.

En outre, il a été trouvé avantageux de stabiliser la pâte aqueuse par plusieurs agents de suspension. On assure cette stabilisation par l'intermédiaire d'au moins deux agents minéraux de mise en suspension.

La silice synthétique ultra-fine amorphe de surface spécifique comprise entre 150 et 300 m² par gramme agit en tant qu'agent de suspension en étant employée à raison de 2 à 5 % par rapport au poids des solides.

Un second agent minéral de suspension peut être constitué par des fibres de verre employées en quantité comprise entre 0,5 et 5 % en poids par rapport aux solides. Ces fibres ont pour effet d'épaissir la pâte aqueuse et donc d'éviter sa décantation. Ce second agent minéral de suspension peut aussi être constitué par une argile purifiée, de type smectite, employée à raison de 0, 1 à 2 % en poids par rapport aux solides.

L'action des agents de suspension minéraux peut être renforcée par un agent de suspension organique. La quantité d'agent organique nécessaire à une bonne suspension de la pâte est comprise entre 0,5 et 2 % en poids par rapport aux produits solides. De préférence, on choisit cet agent de suspension dans la classe des alkylhydroxyalkylcelluloses, le radical alkyl contenant de 1 à 2 atomes de carbone, en particulier l'éthylhydroxyéthylcellulose.

Selon une variante, en l'absence de silice synthétique, la pâte aqueuse contient un agent de suspension et d'épaississement, en quantité comprise entre 8 à 20 % en poids par rapport aux solides, cet agent étant constitué par du silicate de calcium.

La pâte aqueuse à base de silice et de chaux, correspond à un rapport pondéral quantité de chaux sur quantité totale de silice compris entre 0,7 et 1,1 et l'eau est employée en quantité au moins trois fois plus importante que les solides, de préférence dans un rapport de 3 à 4,5.

La silice naturelle est sous forme de quartz broyé finement - farine de quartz - dont la majorité des grains est inférieure ou égale à 40 microns.

La préparation d'une masse silico-calcaire à haute porosité à base d'un mélange de silice et de chaux, stabilisée par plusieurs agents de mise en suspension, et renforcé par un agent d'armature de type fibreux, comprend une série d'étapes, mises en oeuvre selon une procédure déterminée.

On procède à l'extinction de la chaux vive par de l'eau chaude à température de 40 à 85°C, puis on transfère la chaux éteinte dans un mélangeur.

Ensuite, on procède aux diverses additions dans la chaux éteinte des autres constituants de la pâte, de l'agent de renforcement et des agents de suspension dans l'ordre et les conditions suivantes.

Pour respecter le rapport entre la phase liquide et les solides, on additionne la quantité d'eau complémentaire, sous agitation à faible vitesse, suivie d'une homogénéisation toujours à faible vitesse.

Par faible vitesse on désigne des vitesses d'agitation de l'ordre de 500 tours par minute.

Ensuite, on procède à la dispersion de l'agent de renforcement dans la suspension de chaux, sous agitation à faible vitesse, pour homogénéiser la suspension on poursuit l'agitation à forte vitesse pendant 30 minutes.

Par forte vitesse on désigne des vitesses d'agitation de l'ordre de 1.000 tours minute.

Dans la suspension de chaux contenant les fibres de cellulose très partiellement mécaniquement délignifiées, ou partiellement chimiquement délignifiées ou bien partiellement chimiquement délignifiées puis raffinées mécaniquement, parfaitement dispersées, on introduit, sous agitation à faible vitesse, le mélange silice naturelle et silice synthétique, ou silice naturelle et silicate de calcium. A la fin de l'addition on poursuit l'agitation à faible vitesse et sous vide partiel, compris entre 0,06 et 0,08 MPa pendant 10 minutes.

Selon une variante de l'invention, on procède à la stabilisation de la pâte liquide par introduction sous agitation à faible vitesse de l'agent de suspension organique. A la fin de cette addition, on poursuit l'agitation à faible vitesse et sous vide du même ordre de grandeur que précédemment pendant 10 minutes.

Puis, on introduit le second agent de suspension minéral, sous agitation à faible vitesse, et après addition on poursuit l'agitation sous vide à faible vitesse pendant 2 à 3 minutes.

On procède alors, au transfert de la pâte liquide renforcée et stabilisée sous un vide partiel, compris entre 0,08 et 0,09 MPa dans les récipients de stockage des gaz dissous.

Les bouteilles sont maintenues en autoclave sous une pression de vapeur saturante d'eau, approximativement de 1 MPa pendant une vingtaine d'heures.

Finalement, on procède au séchage de la matière poreuse remplissant les bouteilles dans un four, pendant environ 7 jours, à une température inférieure ou égale à 170°C.

La matière poreuse obtenue par le procédé décrit, remplit parfaitement le corps et l'ogive de la bouteille, le retrait longitudinal est inférieur à 1 mm. La masse est monolithique, homogène, d'une porosité comprise entre 88 et 90,5 %, la masse volumique est comprise entre 0,240 kg/l et 0,280 kg/l, la résistance à la compression est de 1,5 MPa à 3,5 MPa, elle est apte au stockage des gaz, tels que les mélanges acétylène-éthylène, acétylène-éthylène-propylène, et en particulier l'acétylène en solution.

Il est donné ci-après des exemples qui illustrent l'invention à titre non limitatif.

EXEMPLE 1 :

● On éteint 15,3 Kg de chaux vive par 48,1 litres d'eau chaude à 72°C. On transfère la chaux éteinte dans un mélangeur, puis on procède à cinq additions successives dans la chaux éteinte dans l'ordre et les conditions suivantes .

● On ajoute 101,9 litres d'eau complémentaire et l'on agite à faible vitesse, de l'ordre de 500 tours/mn, ensuite on disperse, sous agitation à faible vitesse 2,1 kg de fibres longues de cellulose partiellement chimiquement délignifiées, après la fin de l'introduction on agite à forte vitesse de 1.000 tours/mn pendant 30 minutes environ.

● On introduit sous agitation à faible vitesse un mélange constitué de 15,3 kg de silice naturelle broyée (40 μm) et 11,7 kg de silicate de calcium et on agite sous un vide de 0,06 MPa pendant 10 minutes.

● Sous agitation à faible vitesse on additionne 0,94 kg d'éthylhydroxyéthylcellulose en agitant à faible vitesse, on poursuit l'agitation à faible vitesse et sous un vide de 0,06 MPa pendant 10 minutes.

● Enfin, l'on ajoute 1,4 kg de fibres de verre sous agitation à faible vitesse ; on poursuit l'agitation à faible vitesse sous vide pendant 2 à 3 minutes.

La pâte liquide homogène est introduite, sous un vide partiel d'environ 0,08 MPa, dans les bouteilles utilisées pour le stockage d'acétylène à l'état dissous. Les bouteilles pleines sont ensuite munies d'un bouchon poreux avant d'être portées en autoclave. La durée de cuisson en autoclave est d'une vingtaine d'heures pour une pression de vapeur saturante d'eau à environ 1 MPa, on procède ensuite à un séchage progressif dans un four pendant 7 jours, à une température d'environ 150°C.

Après séchage, les masse poreuses contenues dans les bouteilles sont homogènes et présentent un retrait longitudinal inférieur à 1 mm, une résistance à l'écrasement de 1,5 MPa, une porosité de 88,3 % et une masse volumique de 0,290 kg/l.

EXEMPLE 2 :

● On éteint 14,6 Kg de chaux vive par 43,9 litres d'eau chaude à 74°C On transfère la chaux éteinte dans un mélangeur, puis on procède à cinq additions successives dans la chaux éteinte dans l'ordre et les conditions suivantes .

● On ajoute 76,1 litres d'eau complémentaire et l'on agite à faible vitesse, de l'ordre de 500 tours/mn, ensuite on disperse, sous agitation à faible vitesse 3,3 kg de fibres longues de cellulose partiellement chimiquement délignifiées, après la fin de l'introduction on agite à forte vitesse de 1.000 tours/mn pendant 30 minutes environ.

● On introduit sous agitation à faible vitesse 500 tours/mn un mélange constitué de 13,3 kg de silice naturelle broyée (40 μm) et 0,7 kg de silice synthétique ultra-fine amorphe, de surface spécifique 200 m²/g, on poursuit l' agitation sous un vide de 0,06 MPa pendant 10 minutes.

● Sous agitation à faible vitesse on additionne 0.67 kg d'éthylhydroxyéthylcellulose en agitant à faible vitesse, on poursuit l'agitation à faible vitesse et sous un vide de 0,06 MPa pendant 10 minutes.

● Enfin, l'on ajoute 0,67 kg de fibres de verre sous agitation à faible vitesse ; on poursuit l'agitation à faible vitesse sous vide pendant 2 à 3 minutes.

Le transfert de la pâte dans la bouteille, la cuisson en autoclave et le séchage de la masse silicocalcaire sont conduits dans les mêmes conditions que précédemment.

Après séchage, les masses poreuses contenues dans les bouteilles sont homogènes et présentent un retrait longitudinal inférieur à 1 mm, une résistance à l'écrasement de 3,5 MPa, une porosité de 89,2 % et une masse volumique de 0,262 kg/l.

EXEMPLE 3 :

● On éteint 15 Kg de chaux vive par 45 litres d'eau chaude à 75°C. On transfère la chaux éteinte dans un mélangeur, puis on procède à cinq additions successives dans la chaux éteinte dans l'ordre et les conditions suivantes .

● On ajoute 75 litres d'eau complémentaire et l'on agite à faible vitesse, de l'ordre de 500 tours/mn,

ensuite on disperse, sous agitation à faible vitesse 3,3 kg de fibres longues de cellulose partiellement chimiquement délignifiées après la fin de l'introduction on agite à forte vitesse de 1.000 tours/mn pendant 30 minutes environ.

• On introduit sous agitation à faible vitesse 500 tours/mn un mélange constitué de 13,1 kg de silice naturelle broyée (40 μm) et 1,17 kg de silice synthétique ultra-fine amorphe, de surface spécifique 200 m²/g, on poursuit l'agitation sous un vide de 0,06 MPa pendant 10 minutes.

• Sous agitation à faible vitesse on additione 0,3 kg d'éthylhydroxyéthylcellulose en agitant à faible vitesse, on poursuit l'agitation à faible vitesse et sous un vide de 0,06 MPa pendant 10 minutes.

• Enfin, l'on ajoute 0,3 kg de fibres de verre sous agitation à faible vitesse ; on poursuit l'agitation à faible vitesse sous vide pendant 2 à 3 minutes.
Le transfert de la pâte dans la bouteille, la cuisson en autoclave et le séchage de la masse silicocalcaire sont conduits dans les mêmes conditions que précédemment.
Après séchage, les masses poreuses contenues dans les bouteilles sont homogènes et présentent un retrait longitudinal inférieur à 1 mm, une résistance à l'écrasement de 2,3 MPa, une porosité de 88,7 % et une masse volumique de 0,254 kg/l.

EXEMPLE 4 :

• On éteint 15 Kg de chaux vive par 45 litres d'eau chaude à 75°C. On transfère la chaux éteinte dans un mélangeur, puis on procède à cinq additions successives dans la chaux éteinte dans l'ordre et les conditions suivantes .

• On ajoute 75,2 litres d'eau complémentaire et l'on agite à faible vitesse, de l'ordre de 500 tours/mn, ensuite on disperse, sous agitation à faible vitesse 1,1 kg de fibres longues de cellulose partiellement chimiquement délignifiées, après la fin de l'introduction on agite à forte vitesse de 1.000 tours/mn pendant 30 minutes environ.

• On introduit sous agitation à faible vitesse 500 tours/mn un mélange constitué de 13,1 kg de silice naturelle broyée (40 μm) et 1,2 kg de silice synthétique ultra-fine amorphe, de surface spécifique 200 m²/g, on poursuit l' agitation sous un vide de 0,06 MPa pendant 10 minutes.

• Sous agitation à faible vitesse on additionne 1,2 kg d'éthylhydroxyéthylcellulose en agitant à faible vitesse, on poursuit l'agitation à faible vitesse et sous un vide de 0,06 MPa pendant 10 minutes.

• Enfin, l'on ajoute 0,3 kg de fibres de verre sous agitation à faible vitesse ; on poursuit l'agitation à faible vitesse sous vide pendant 2 à 3 minutes.
Le transfert de la pâte dans la bouteille, la cuisson en autoclave et le séchage de la masse silicocalcaire sont conduits dans les mêmes conditions que précédemment.
Après séchage, les masses poreuses contenues dans les bouteilles sont homogènes et présentent un retrait longitudinal inférieur à 1 mm, une résistance à l'écrasement de 2 MPa, une porosité de 90 % et une masse volumique de 0,255 kg/l.

EXEMPLE 5 :

• On éteint 13,1 Kg de chaux vive par 40 litres d'eau chaude à 80°C. On transfère la chaux éteinte dans un mélangeur, puis on procède à cinq additions successives dans la chaux éteinte dans l'ordre et les conditions suivantes .

• On ajoute 80,6 litres d'eau complémentaire et l'on agite à faible vitesse, de l'ordre de 500 tours/mn, ensuite on disperse, sous agitation à faible vitesse 6,7 kg de fibres longues de cellulose partiellement chimiquement délignifiées, après la fin de l'introduction on agite à forte vitesse de 1.000 tours/mn pendant 30 minutes environ.

• On introduit sous agitation à faible vitesse 500 tours/mn un mélange constitué de 11,5 kg de silice naturelle broyée (40 μm) et 1,2 kg de silice synthétique ultra-fine amorphe, de surface spécifique 200 m²/g, on poursuit l' agitation sous un vide de 0,06 MPa pendant 10 minutes.

• Sous agitation à faible vitesse on additionne 0,17 kg d'éthylhydroxyéthylcellulose en agitant à faible vitesse, on poursuit l'agitation à faible vitesse et sous un vide de 0,06 MPa pendant 10 minutes.

• Enfin, l'on ajoute 0,7 kg de fibres de verre sous agitation à faible vitesse ; on poursuit l'agitation à faible vitesse sous vide pendant 2 à 3 minutes.
Le transfert de la pâte dans la bouteille, la cuisson en autoclave et le séchage de la masse silicocalcaire sont conduits dans les mêmes conditions que précédemment.
Après séchage, les masses poreuses contenues dans les bouteilles sont homogènes et présentent un retrait longitudinal inférieur à 1 mm, une résistance à l'écrasement de 1,5 MPa, une porosité de 89,2 % et une masse volumique de 0,24 kg/l.

EXEMPLE 6 :

• On éteint 15,7Kgs de chaux vive par 47,2 litres d'eau à 85°C, on transfère la chaux éteinte dans un mélangeur, puis on procède à quatre additions successives dans l'ordre et les conditions suivantes :

• On ajoute 72 litres d'eau complémentaire et l'on agite à faible vitesse, de l'ordre de 500 tours/mn, ensuite on disperse sous agitation à faible vitesse 1,7 kg de fibres longues de cellulose délignifiées puis raffinées par traitement mécanique, après la fin de l'introduction on agite à forte vitesse de 1000 tours/mn pendant 30 minutes environ.

• On introduit sous agitation à faible vitesse 500 tours/mn, un mélange constitué de 13,8 kg de silice naturelle broyée (40 microns) et 1,6 kg de silice synthétique ultra-fine amorphe, de surface spécifique 200 m²/g, on poursuit l'agitation sous un vide de 0,06 MPa pendant 10 minutes.

• Sous agitation à faible vitesse, on additionne 0,3kg d'argile de type smectite (Bentone EW (R)), en agitant à faible vitesse, on poursuit l'agitation à faible vitesse et sous un vide de 0,06 MPa pendant 10 minutes.

Le transfert de la pâte dans la bouteille, la cuisson en autoclave et le séchage de la masse silico-calcaire sont conduits dans les mêmes conditions que précédemment.

Après séchage, les masses poreuses contenues dans les bouteilles présentent un retrait longitudinal inférieur à 1 mm, une résistance à l'écrasement de 2,2 MPa, une porosité de 88 %, et une masse volumique de 0,26 kg/l.

## Revendications

1. Procédé de préparation d'une masse silicocalcaire à haute porosité d'au moins 88%, utilisable dans le domaine des matières de garnissage pour récipients de stockage de gaz, à partir d'une pâte aqueuse à base d'un mélange de silice naturelle et de chaux éteinte, stabilisée au moyen d'un agent de mise en suspension et renforcée par un agent d'armature de type fibreux, caractérisé par le fait qu'il comprend les étapes suivantes :

a) extinction de la chaux vive par de l'eau chaude à une température comprise entre 40 et 85°C ;

b) addition d'eau complémentaire, sous agitation à faible vitesse de l'ordre de 500 tours/min, suivie d'une homogénéisation par agitation toujours à faible vitesse ;

c) dispersion dans la suspension de chaux, sous agitation à faible vitesse de l'odre de 500 tours/min, d'un agent de renforcement constitué par des fibres de cellulose choisies parmi les fibres très partiellement mécaniquement délignifiées, partiellement chimiquement délignifiées ou partiellement chimiquement délignifiées puis raffinées par traitement mécanique ou par un mélange de ces fibres, en une quantité de 3 à 30% : en poids par rapport aux produits solides, suivie d'une homogénéisation de la suspension par agitation à forte vitesse de l'ordre de 1000 tours/min pendant 30 min ;

d) introduction sous agitation à faible vitesse de l'ordre de 500 tours/min d'un mélange de silice naturelle sous forme de quartz broyé finement dont la majorité des grains est de taille inférieure ou égale à 40 μm, et d'un premier agent minéral de mise en suspension ;

e) dispersion dans la pâte aqueuse, sous agitation, d'un second agent minéral de mise en suspension ; le rapport pondéral quantité de chaux sur quantité totale de silice étant compris entre 0,7 et 1,1 et l'eau étant employée en quantité au moins trois fois plus importante que les solides, de préférence dans un rapport de 3 à 4,5 ;

f) transfert de la pâte dans les récipients de stockage de gaz sous un vide partiel ;

g) maintien des récipients de stockage de gaz en autoclave sous une pression de vapeur saturante d'eau d'environ 1 MPa pendant une vingtaine d'heures ;

h) séchage des récipients de stockage de gaz dans un four pendant environ 7 jours à une température inférieure ou égale à 170°C.

2. Procédé de préparation d'une masse silicocalcaire à haute porosité selon la revendication 1, caractérisé par le fait que le premier agent minéral de mise en suspension est choisi parmi la silice synthétique ultrafine amorphe de surface spécifique comprise entre 150 et 300 m²g, utilisée à raison de 2 à 5% en poids par rapport aux solides, et le silicate de calcium, utilisé à raison de 8 à 20% en poids par rapport aux solides, et le second agent minéral de mise en suspension est constitué par des fibres de verre introduites à raison de 0,5 à 5% en poids par rapport aux solides ou par une argile hautement purifiée introduite à raison de 0,1 à 2% en poids par rapport aux solides.

3. Procédé de préparation d'une masse silicocalcaire selon la revendication 1 ou 2, caractérisé par le fait qu'on procède à la stabilisation de la pâte liquide, avant la dispersion du second agent minéral de mise en suspension, par introduction sous agitation à faible vitesse de l'ordre de 500 tours/min d'un agent de mise en suspension d'origine organique constitué par une alkylhydroxyalkylcellulose, en particulier l'éthylhydroxyéthyléthylcellulose, en une quantité de 0,5 à 2% en poids par rapport aux solides.

4. Procédé de préparation d'une masse silicocalcaire selon l'une quelconque des revendications 1 à 3, caractérisé par le fait que le premier agent minéral de mise en suspension est un mélange de silice naturelle et de silice synthétique ultrafine amorphe de surface spécifique comprise entre 150 et 300 m²g représentant 2 à 5% des produits solides.

5. Récipient de stockage de gaz comprenant une bouteille métallique parfaitement remplie par une masse monolithique silico-calcaire obtenue par le procédé selon l'une quelconque des revendications 1 à 4.

6. Application du récipient de stockage de gaz selon la revendication 5 au stockage d'une solution d'acétylène dissous.

## Claims

1. Method of preparation for a silicocalcareous mass having high porosity of at least 88 %, which mass can be used in the field of packing materials for gas storage containers, starting from an aqueous paste based on a mixture of natural silica and slaked lime, stabilised by means of a suspension agent and reinforced by a strengthening agent of the fibrous type, **characterised in that** the said method comprises the following steps :

a) the slaking of the quicklime by hot water at a temperature of between 40 and 85 °C ;

b) the addition of supplementary water, with stirring at a low speed in the order of 500 revolutions per minute, followed by homogenisation by stirring, still at a low speed ;

c) the dispersal in the lime suspension, with stirring at a low speed in the order of 500 revolutions per minute, of a strengthening agent formed by cellulose fibres chosen from among fibres which have been very partially mechanically delignified, partially chemically delignified or partially chemically delignified then refined by mechanical treatment, or formed by a mixture of these fibres, in a quantity of between 3 and 30 % by weight in proportion to the solid products, followed by homogenisation of the suspension by stirring at a high speed in the order of 1,000 revolutions per minute for 30 minutes ;

d) the introduction, with stirring at a low speed in the order of 500 revolutions per minute, of a mixture of natural silica in the form of finely crushed quartz, the majority of the grains of which are equal to or less than 40 $\mu$m in size, and a first mineral suspension agent ;

e) the dispersal in the aqueous paste, with stirring, of a second mineral suspension agent ; the ratio by weight of the quantity of lime to the total quantity of silica being between 0.7 and 1.1, and the quantity of water used being at least three times greater than the quantity of solids, preferably in a ratio of 3 to 4.5 ;

f) the transfer of the paste into the gas storage containers under a artial vacuum ;

g) maintaining the gas storage containers in an autoclave under a saturating water vapour pressure of approximately 1 MPa for approximately 20 hours ;

h) drying the gas storage containers in an oven for approximately 7 days at a temperature less than or equal to 170 °C.

2. Method of preparation for a high-porosity silicocalcareous mass according to claim 1, **characterised in that** the first mineral suspension agent is chosen from among ultrafine amorphous synthetic silica having a specific surface area of between 150 and 300 $m^2$/g, this silica being used at the rate of 2 to 5 % by weight in proportion to the solids, and calcium silicate, being used at the rate of 8 to 20 % by weight in proportion to the solids, and the second mineral suspension agent is formed by glass fibres introduced at the rate of 0.5 to 5 % by weight in proportion to the solids, or by a highly purified clay introduced at the rate of 0.1 to 2 % by weight in proportion to the solids.

3. Method of preparation for a silicocalcareous mass according to claim 1 or 2, **characterised in that** one proceeds to stabilise the liquid paste before dispersal of the second mineral suspension agent, by the introduction with stirring at a low speed in the order of 500 revolutions per minute of a suspension agent of organic origin formed by an alkylhydroxyalkyl cellulose, in particular ethylhydroxyethylethyl cellulose, in a quantity of 0.5 to 2 % by weight in proportion to the solids.

4. Method of preparation for a silicocalcareous mass according to any one of claims 1 to 3, **characterised in that** the first mineral suspension agent is a mixture of natural silica and ultrafine amorphous synthetic silica having a specific surface area of between 150 and 300 $m^2$/g representing 2 to 5 % of the solid products.

5. Gas storage container comprising a metal bottle completely filled by a monolithic silicocalcareous mass obtained by the method according to any one of claims 1 to 4.

6. Use of the gas storage container according to claim 5 for the storage of a solution of dissolved acetylene.

## Ansprüche

1. Verfahren zur Herstellung einer kiesel- und kalkartigen Masse hoher Porosität von wenigstens 88 %, die auf dem Gebiet der Auskleidungsmaterialien für Gaslagerbehälter brauchbar ist, aus einem wäßrigen Brei auf der Basis eines Gemisches von natürlicher Kieselsäure und gelöschtem Kalk, welcher mit Hilfe eines Suspendiermittels stabilisiert und durch ein Verstärkungsmittel vom Fasertyp verstärkt ist, **dadurch gekennzeichnet**, daß es die folgenden Stufen umfaßt :

a) Löschen des ungelöschten Kalkes mit warmem Wasser bei einer Temperatur zwischen 40 und 85°C ;

b) Zugabe von Ergänzungswasser unter Rühren mit geringer Geschwindigkeit in der Größenordnung von 500 U/min, gefolgt von einer Homogenisierung durch Rühren immer mit geringer Geschwindigkeit ;

c) Dispergieren eines Verstärkungsmittels, das aus Cellulosefasern, die unter den teilweise mechanisch delignifizierten, teilweise chemisch delignifizierten oder teilweise chemisch delignifizierten und dann durch mechanische Behandlung raffinierten Fasern ausgewählt sind, oder einem Gemisch dieser Fasern besteht, in einer Menge von 3 bis 30 Gew.-%, bezogen auf die Feststoffe, in der Kalksuspension unter Rühren mit geringer Geschwindigkeit in der Größenordnung von 500 U/min, gefolgt von einer Homogenisierung der Suspension durch Rühren mit großer Geschwindigkeit in der Größenordnung von 1000 U/min während 30 min ;

d) Einführung eines Gemisches von natürlicher Kieselsäure in Form von fein vermahlenem Quarz, dessen Hauptteil der Körner eine Größe unterhalb oder gleich 40 µm hat, und eines ersten mineralischen Suspendiermittels unter Rühren mit geringer Geschwindigkeit in der Größenordnung von 500 U/min ;

e) Dispergieren eines zweiten mineralischen Suspendiermittels in dem wäßrigen Brei unter Rühren, wobei das Gewichtsverhältnis der Kalkmenge zur Gesamtkieselsäuremenge zwischen 0,7 und 1,1 liegt und wobei das Wasser in einer wenigstens dreimal größeren Menge als die Feststoffe, vorzugsweise in einem Verhältnis von 3 bis 4,5 verwendet wird ;

f) Überführung des Breies in die Gaslagerbehälter unter einem Teilvakuum ;

g) Halten der Gaslagerbehälter im Autoklaven unter einem Sättigungswasserdampfdruck von etwa 1l MPa während etwa 20 h ;

h) Trocknung der Gaslagerbehälter in einem Ofen während etwa 7 Tagen bei einer Temperatur unterhalb oder gleich 170 °C.

2. Verfahren zur Herstellung einer kiesel- oder kalkartigen Masse hoher Porosität nach Anspruch 1, **dadurch gekennzeichnet,** daß das erste mineralische Suspendiermittel unter der synthetischen ultrafeinen amorphen Kieselsäure mit einer spezifischen Oberfläche zwischen 150 und 300 m²/g, die in einer Menge von 2 bis 5 Gew.-%, bezogen auf die Feststoffe, benutzt wird, und Calciumsilikat, das in einer Menge von 8 bis 20 Gew.-%, bezogen auf die Feststoffe, benutzt wird, ausgewählt wird und daß das zweite mineralische Suspendiermittel aus Glasfasern, die in einer Menge von 0,5 bis 5 Gew.-%, bezogen auf die Feststoffe, oder aus einem hochgereinigten Ton, der in einer Menge von 0,1 bis 2 Gew.-%, bezogen auf die Feststoffe, eingeführt wird, besteht.

3. Verfahren zur Herstellung einer kiesel- und kalkartigen Masse nach Anspruch 1 oder 2, **dadurch gekennzeichnet,** daß man bei der Stabilisierung des flüssigen Breies vor dem Dispergieren des zweiten mineralischen Suspendiermittels unter Einführung eines Suspendiermittels organischen Ursprungs, das aus einer Alkylhydroxyalkylcellulose, insbesondere Ethylhydroxyethylcellulose, besteht in einer Menge von 0,5 bis 2 Gew.-%, bezogen auf die Feststoffe, unter Rühren mit einer geringern Geschwindigkeit in der Größenordnung von 500 U/min arbeitet.

4. Verfahren zur Herstellung einer kiesel- und kalkartigen Masse nach einem der Ansprüche 1 bis 3, **dadurch gekennzeichnet,** daß das erste mineralische Suspendiermittel ein Gemisch von natürlicher Kieselsäure und ultrafeiner amorpher synthetischer Kieselsäure mit einer spezifischen Oberfläche zwischen 150 und 300 m²/g in einer Menge von 2 bis 5 % der Feststoffe ist.

5. Gaslagerbehälter mit einer Metallflasche, die vollständig mit einer monolithischen kiesel- und kalkartigen Masse gefüllt ist, die nach dem Verfahren nach einem der Ansprüche 1 bis 4 erhalten wurde.

6. Verwendung des Gaslagerbehälters nach Anspruch 5 zur Lagerung einer Lösung von gelöstem Acetylen.